# EUROPEAN PATENT APPLICATION

(11) **EP 0 615 881 A2**
(43) Date of publication of application: **21.09.1994**
(21) Application number: 94830085.0
(22) Date of filing: 24.02.1994
(51) Int. Cl.: B60Q 1/30

(54) **Rear mounted luminous three-light car indicator**

(30) Priority: 02.03.1993 IT AN930015
(71) Applicant: NERI - S.R.L., I-60013 Corinaldo (AN) (IT)
(72) Inventor: Neri, Giovanni, I-60013 Corinaldo (AN) (IT)
(74) Representative: Baldi, Claudio

(57) **Abstract**

This invention concerns a rear mounted luminous indicator which warns car drivers behind the car of the driver's intentions; the indicator has three lights: a green light, which turns on when the accelerator is pushed, a red light, which turns on when the brake is pushed and a yellow light which turns on when the car driver releases the accelerator and the brake, with the engine running.

## Description

This patent application concerns a rear mounted three-light car indicator which warns car drivers behind the car of the driver's intentions.

Currently cars and motor vehicles have conventional rear indicator lights consisting of tail lights, stop lights, back-up lights and left and right traffic indicators. More recently other lights have appeared on cars (known as simultaneous double stop lights) which are generally positioned just above the boot bonnet or even on the roof of the car - which act as double stop lights - but which are mounted in a position which is much more clearly visible.

The luminous indicator according to the invention is an absolute novelty in this technical field; the indicator according to the invention is designed to provide quite clearly from the rear of the car, different indications regarding the driver's intentions with respect to those provided by conventional indicator lights.

Car drivers behind a car with the device according to the invention will be warned of the driver's actions even before the conventional indicator lights, such as the left and right traffic indicators and stop lights, turn on. The device according to the invention is designed for mounting in a clearly visible position on the back of the vehicle (for example above the boot bonnet, on the roof or even inside the rearview window), thereby being clearly visible to other drivers; it can be mounted as a single element at the centre of the car, or in two elements, one on each side of the back of the vehicle.

It is obvious that the device according to the invention may to all effects and purposes be considered as a safety device, in that its main purpose is to reduce as far as possible - or even prevent entirely - the risk of rear collision between quelled cars - this type of accident being not only extremely frequent but also very dangerous.

In particular, the luminous indicator according to the invention has three differently coloured lights: a green light, a yellow light and a red light.

The choice of colours is intentional in that the same correspond to the same signals transmitted by traffic lights: the red light warns the driver behind that he must brake; the yellow light warns the driver behind to slow down and proceed with caution; the green light is a "road clear" signal and means that the driver behind can continue driving at the same speed or even accelerate.

In structural terms, the three indicator lights are characterized by an electrical circuit connected to the accelerator and brake of the car.

When the engine is turned on, and before the pedals are pushed, the yellow light of the device in question turns on (to warn other drivers that even though the car is parked, the engine is running and the car is ready to move).

The green light turns on when the accelerator is pushed; the green light warns other drivers that the car is accelerating, meaning that the car is not about to slow down.

When the driver lifts his foot from the accelerator, the green light turns off and the yellow light turns on again;
this is a warning signal to other drivers and means that even if the car is not braking, the driver's foot is no longer on the accelerator and the car is inevitably slowing down prior to braking or turning.

When the driver brakes, the yellow light turns off and the red light (fixed or flashing) turns on to warn the driver behind that he needs to brake.

Obviously, this red light turns on at the same time as the conventional stop lights so that the luminous indicator according to the invention acts as a double stop light, but in a position which is much more clearly visible than the conventional stop lights.

The yellow and red lights of the device according to the invention may either be fixed or flashing.

For the sake of major clarity, the description of the invention continues with reference to the enclosed drawings which are intended for illustrative purposes and not in a limiting sense, whereby:

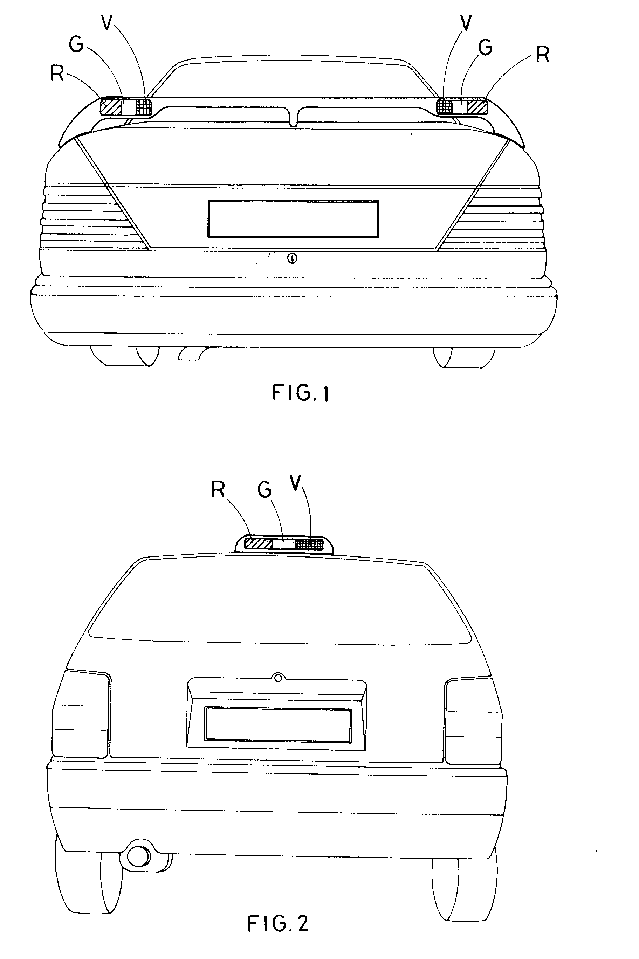

- figure 1 is a rear view of a car with a pair of luminous indicators according to the invention mounted at the side ends of a spoiler;
- fig. 2 is a rear view of a car with the luminous indicator according to the invention mounted at the centre of the roof;
- fig. 3 is a diagram of the electric circuit which connects the indicator in question to the car accelerator and brake.

With reference to the first two drawings, the indicator according to the invention has three differently coloured lights: a yellow light at the centre (G) and two side lights being green (V) and red (R) respectively.

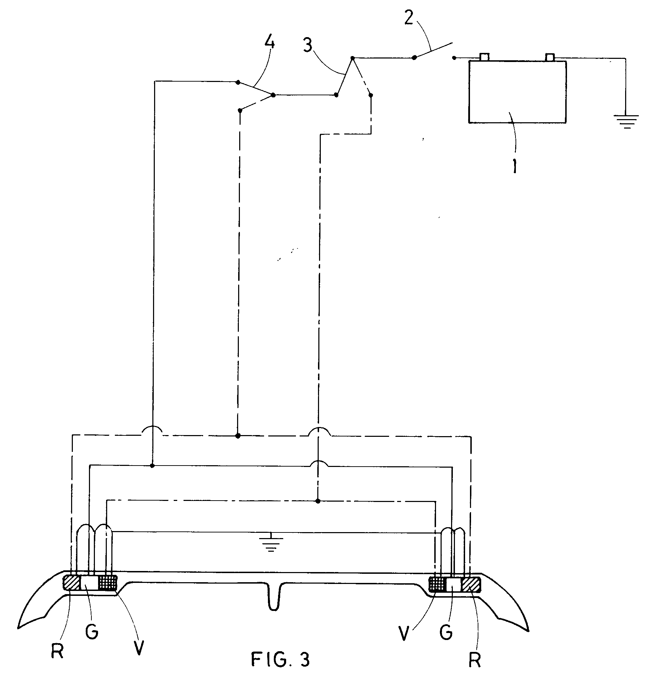

Reference is now made to the circuit illustrated in figure 3 in order to explain how the electric circuit of the device according to the invention, operates.

When the car engine is turned on, the electric circuit, which is powered by battery (1), is closed by means of circuit-breaker (2), thereby turning on the yellow light (G) of the device according to the invention; the red light (R) and the green light (V) are off in that their respective circuit breakers-switches (3) and (4) are closed on the line which carries current to the yellow light (G), which corresponds to cutting off the power to the other lights (V) and (R).

This means that when either of the circuit breakers-switches (3) and (4) open, the power supply line to the yellow light (G) will be cut off.

In particular, by pushing the accelerator, the circuit breaker-switch (3) shifts so as to cut off the current along the line to the yellow light (G) and simultaneously activating the current along the line to the green light (V).

When the accelerator is released, said commutation will obviously be reversed thereby turning off the green light (V) and turning on the yellow light (G).

By pushing the brake, the circuit breaker-switch (4) shifts so as to cut off the current along the line to the yellow light (G) and simultaneously activates the current along the line to the red light (R).

Obviously, when the brake is released, said commutation is reversed thereby turning off the red light (R) and turning on the yellow light (G).

## Claims

1. A rear mounted luminous three-light car indicator characterized in that the lights used are green (V), yellow (G) and red (R), the same being connected electrically to the car ignition, the brake and the accelerator, so that the yellow light (G) turns on when the engine is turned on thereby staying on until the brake is pushed, followed by lighting up of the red light (R), or until the accelerator is pushed, followed by lighting up of the green light (V); when the brake and the accelerator are released, thereby turning off the red light (R) and the green light (V) respectively, the yellow light (G) will turn on.

2. A rear mounted luminous three-light car indicator, according to claim 1, characterized by an electrical circuit having a main line connected directly to the battery (1) of the car designed to supply power to the yellow light (G) having a circuit-breaker (2) along the line and two circuit breakers-switches (3) and (4), the first of which (3) commutes the power of the main line to a second line which carries current to the green light (V), while the second circuit breaker-switch (4) commutes the power of the main line to a third line which carries current to the red light (R); moreover, the device according to the invention is so designed that upon ignition of the engine, circuit breaker (2) closes the main line thereby turning on the yellow light (G), thanks also to the fact that the above circuit breakers-switches (3) and (4) on hold, are automatically positioned to ensure the continuity of the main line; moreover, by pushing down the accelerator, the circuit breaker-switch (3) is commuted from the main line - namely the power supply line of the yellow light (G) - to the line which carries current to the green light (V), while by pushing down the brake, the circuit breaker-switch (4) is commuted from the above main line to the line which carries power to the red light (R).
